# EUROPÄISCHE PATENTSCHRIFT

(11) **EP 1 575 692 B1**
(45) Veröffentlichungstag und Bekanntmachung des Hinweises auf die Patenterteilung: **21.05.2008**
(21) Anmeldenummer: 03785919.6
(22) Anmeldetag: 22.12.2003
(51) Int. Cl.: B01D 53/18, B01D 53/50

(54) **SPRÜHEINBAU FÜR EINEN TURM EINER ANLAGE ZUR BEHANDLUNG EINES GASSTROMS MIT EINER FLÜSSIGKEIT**
SPRAY FITTING FOR A TOWER PERTAINING TO AN INSTALLATION FOR TREATING A GAS FLOW WITH A LIQUID
MECANISME RAPPORTE DE PULVERISATION POUR UNE TOUR D'UNE INSTALLATION DE TRAITEMENT D'UN FLUX DE GAZ A L'AIDE D'UN LIQUIDE

(30) Priorität: 23.12.2002 DE 20219923 U; 28.04.2003 DE 20306533 U
(43) Veröffentlichungstag der Anmeldung: 21.09.2005
(73) Patentinhaber: FISIA Babcock Environment GmbH, 51643 Gummersbach (DE)
(72) Erfinder: BRAUN, Werner, 97276 Magretshöchheim (DE); ENGELKING, Wolfram, 51674 Wiehl (DE); SCHADOW, Uwe-Paul, 51643 Gummersbach (DE)
(74) Vertreter: Carstens, Wilhelm
(86) Internationale Anmeldenummer: PCT/EP2003/014746
(87) Internationale Veröffentlichungsnummer: WO 2004/058383

(56) Entgegenhaltungen:
- US-A- 4 776 989
- US-A- 5 620 144

## Beschreibung

Die Erfindung betrifft zunächst einen Sprüheinbau für einen Turm einer Anlage zur Behandlung eines Gasstroms mit einer Flüssigkeit, insbesondere für eine Rauchgasreinigungsanlage, mit einem sich im wesentlichen horizontal durch die Turmmitte erstreckenden Hauptrohr, einer Vielzahl von sich zu beiden Seiten des Hauptrohrs im wesentlichen in einer Ebene erstreckenden Verteilerrohren und einer Vielzahl von jedem Verteilerrohr zugeordneten Sprühdüsen, wobei dem Einbau mindestens eine Pumpe zur Einspeisung der Behandlungsflüssigkeit in das Hauptrohr zugeordnet ist.

Bei einer Rauchgaswäsche mit einer Ca-haltigen Suspension zur Abscheidung von SO2 und anderen Bestandteilen müssen große Suspensionsmengen über den Querschnitt des Waschturms verteilt werden. Hierzu sind in dem Wäscher in mindestens zwei übereinander liegenden Ebenen Sprüheinbauten mit Hauptrohr und Verteilerrohren vorgesehen, denen jeweils mindestens eine Pumpe zugeordnet ist, siehe zum Beispiel US 5 620 144. Bei Speisung mit nur einer Pumpe und ihrem Ausfall fällt die Sprühebene aus. Bei Speisung des Sprüheinbaus mit zwei Pumpen bleibt bei Ausfall einer Pumpe die komplette Sprühebene bezüglich Verteilung, Druck und erzeugter spezifischer Oberfläche der Tropfen nicht mehr funktionsfähig.

Es ist daher die Aufgabe der Erfindung einen Sprüheinbau zu schaffen, bei dem die von zwei Pumpen geförderten Mengen an Behandlungsflüssigkeit unabhängig von einander in einer Sprühebene eingespeist werden können.

Diese Aufgabe wird dadurch gelöst, dass das Hauptrohr zweikanalig ausgebildet ist und jeder Kanal über mindestens eine Pumpe mit Behandlungsflüssigkeit beaufschlagbar ist und auf jeder Seite des Hauptrohrs ein Teil der Verteilerrohre mit dem einen Kanal und der andere Teil der Verteilerrohre mit dem anderen Kanal verbunden ist.

Durch die zweikanalige Ausbildung des Hauptrohrs und den Anschluß der Verteilerrohre auf den beiden Seiten des Hauptrohrs an den einen oder den anderen Kanal können die Fördermengen der beiden Pumpen unabhängig voneinander in einer Höhenkoordinate eingespeist werden. Es legen daher in einer Sprühebene zwei völlig voneinander getrennte Verteilersysteme vor. Der Platzbedarf einer üblicherweise zum Einsatz kommenden Anordnung zweier übereinander liegender Sprühebenen an Höhe in dem Behandlungsturm wird auf den Platzbedarf einer Sprühebene reduziert. Gleichzeitig erfolgt eine Reduzierung des Kraftbedarfs der Anlage.

Sollten wegen der Größe der zu behandelnden Gasmenge doch mehrere Sprühebenen erforderlich sein, kann bei der erfindungsgemäßen Ausgestaltung der Sprüheinbauten in zwei übereinander liegenden Sprühebenen beim Abstellen einer Pumpe in der einen Ebene die andere darüber- oder darunterliegende Sprühebene deren Funktion bezüglich der Aufteilung übernehmen. Damit ergänzen sich die auf unterschiedlichen Höhen angeordneten Ebenen zu einer voll funktionsfähigen Suspensionsebene. Gasdurchbrüche werden somit vermieden.

Die Zweikanaligkeit des Hauptrohrs wird in einer bevorzugten Weise dadurch erreicht, dass sich in dem Hauptrohr ein Blech im wesentlichen vom Tiefstpunkt an dem einen Ende des Hauptrohrs im wesentlichen zu dem Höchstpunkt an dem anderen Ende des Hauptrohrs erstreckt, wobei die Einspeisung der Behandlungsflüssigkeit an gegenüberliegenden Enden der Kanäle erfolgt.

Bei dieser Ausführungsform können die Verteilerrohre auf einfache Weise - gffs. über gekrümmte Zwischenstücke - durch die Rohrwandung an die Kanäle angeschlossen werden.

Eine weitere Ausführungsform der Zweikanaligkeit wird dadurch erreicht, dass in dem Hauptrohr ein Hilfsrohr angeordnet ist und der zwischen Hauptrohr und Hilfsrohr bestimmte Ringraum den einen Kanal und das Innere des Hilfsrohrs den anderen Kanal bestimmt, wobei eine Einspeisung von Behandlungsflüssigkeit an gegenüberliegenden Enden oder an benachbarten Enden der Kanäle erfolgt.

Um auf einfachste Weise Einspeisungssysteme mit möglichst gleichmäßiger Verteilung der Flüssigkeit zu erhalten, ist vorgesehen, dass die Verteilerrohre auf jeder Seite des Hauptrohrs abwechselnd mit dem einen Kanal oder dem anderen Kanal verbunden sind. Neben einem Verteilerrohr des einen Systems liegt somit immer ein Verteilerohr des anderen Systems. Wie bei den bekannten Einbauten ist die Länge der seitlichen Verteilerrohre an die Querschnittsgeometrie des Turms bzw. Wäschers angepaßt.

Weiter ist es zur Vergleichmäßigung des Sprühdrucks über die Länge der Verteilerrohre zweckmäßig, wenn der Querschnitt der Verteilerrohre zum freien Ende hin abgestuft ist oder stetig abnimmt.

Dabei wird bevorzugt, dass die Stufung so erfolgt, dass die Verteilerrohre eine flache und eine gegenüberliegende gestufte Seite aufweisen.

Für die Anordnung der Verteilerrohre im Sprüheinbau wird weiterhin bevorzugt, dass die Verteilerrohre mit ihrer flachen Seite als Oberseite angeordnet sind. Dann können für Wartungsarbeiten Holzbohlen oder dgl. auf die Verteilerrohre sicher aufgelegt werden, die ein sicheres Begehen des Sprüheinbaus ohne Stufen oder Absätze ermöglichen.

Die Aufteilung der Düsen an den Verteilerrohren wird so gewählt, dass die Abstände benachbarter und von den Verteilerrohren getragenen Düsen innerhalb der Sprühebene in allen Richtungen gleich sind. Eine optimale Flächenbelegung wird dann auch noch bei Ausfall einer halben Suspensionsverteilungsebene erreicht. Großflächige Durchbrüche des zu behandelnden Gases durch die Ebene werden vermieden.

Die Düsenanordnung an den Verteilerrohren kann eine Gegenstrom-, eine Gleichstrom oder eine Gleich-/Gegenstrombedüsung sein.

Die Erfindung betrifft auch einen Turm einer Gasbehandlungsanlage, der mit mindesten einem Sprüheinbau nach mindestens einem der Ansprüche 1 - 8 ausgerüstet ist.

Die Erfindung soll nun anhand der beigefügten Figuren näher erläutert werden. Es zeigt:
- Fig. 1: eine Aufsicht auf eine Ausführungsform des erfindungsgemäßen Sprüheinbaus,
- Fig. 2: eine Seitenansicht auf den Sprüheinbau gemäß Fig.2 bzw. einen Teilschnitt längs der Linie G-G in Fig.1,
- Fig. 3A - F: eine Vertikalseitenansicht der Verteilerrohre bzw. einen Vertikalschnitt durch das Hauptrohr bei dem Sprüheinbau gemäß Fig.1 und 2 längs der Linien A-A, B-B, C-C, D-D, E-E und F-F in Fig.2
und
- Fig. 4: einen Teilvertikalschnitt durch das Hauptrohr einer weiteren Ausführungsform des erfindungsgemäßen Sprüheinbaus.

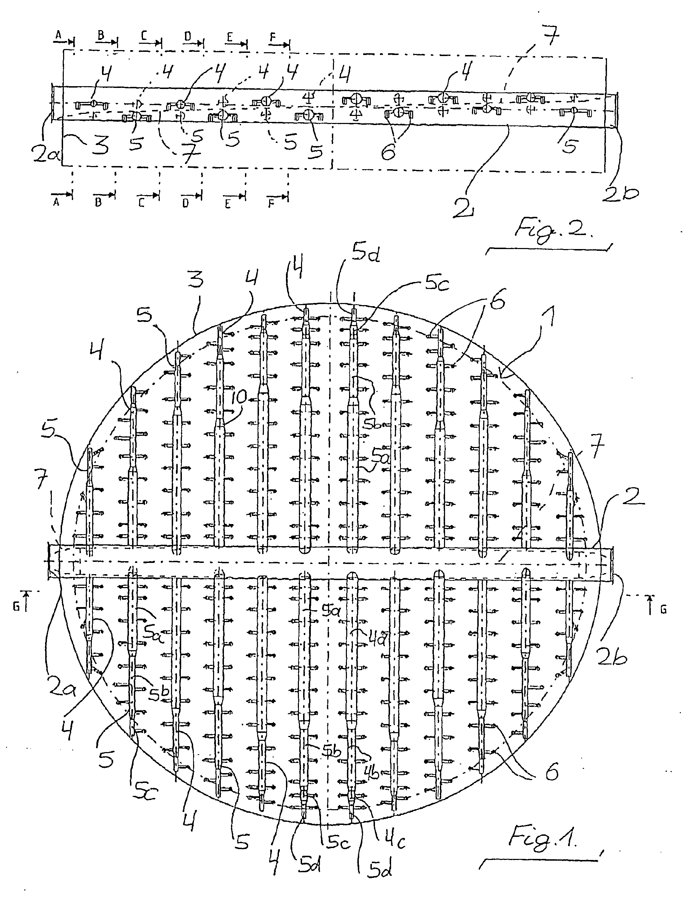

Gemäß Fig.1 weist der Sprüheinbau 1 ein Hauptrohr 2 auf, dessen beide Enden 2a und 2b die Wandung 3 eines Waschturms durchsetzen, der einen kreisförmigen Querschnitt aufweist. Das Rohr erstreckt sich horizontal und durch die Mitte des Waschturms.

Auf den beiden Seiten des Hauptrohrs 2 erstrecken sich senkrecht zum Hauptrohr 2 und parallel zueinander Verteilerrohre 4 und 5. Die Länge der Verteilerrohre ist so gewählt, dass sie jeweils in der Nähe der Wandung des Wäschers enden. An den Verteilerrohren 4 und 5 sind eine Vielzahl von Düsen 6 paarweise in Gegenüberstellung angeordnet. In den Endbereichen der Verteilerrohre sind auch einige Düsen 6' in Einzeistellung angeordnet. Die Anordnung und Verteilung der Düsen ist so getroffen, dass eine gleichmäßige Flächenverteilung über die von dem Hauptrohr und den Verteilerrohren bestimmte Sprühebene erreicht wird.

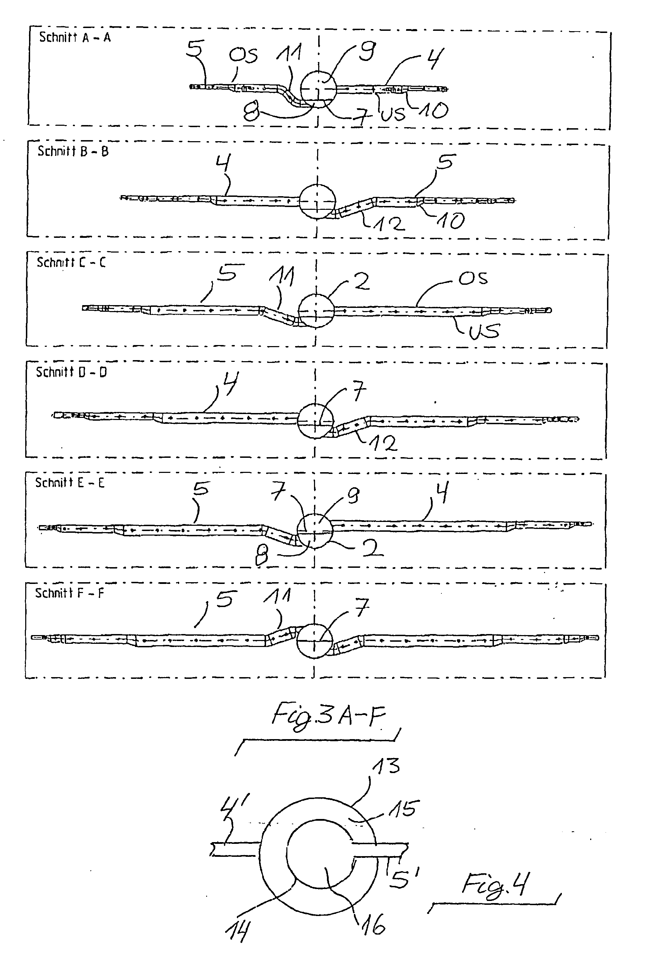

Wie aus den Fig.1, 2 und 3 ersichtlich erstreckt sich in dem Hauptrohr 2 ein Blech 7 vom Tiefstpunkt des Rohres im Bereich des Rohrendes 2a (linkes Rohrende in Fig.2) zum Höchstpunkt des Rohres im Bereich des Rohrendes 2b (rechtes Rohrende in Fig.2). Das Blech ist an seinen Enden wie aus den Fig.1-2 ersichtlich zur Rohrkante hin geneigt und dabei leicht zungenartig ausgebildet. Am Ende ist jeeils ein anderer Winkel gewählt, damit der Anschlußstutzen nach Außen hin nicht zu lang wird. Wie aus den Fig. 3A-3F ablesbar liegt die jeweilige Schnittlinie des geneigten Blechs stets horizontal.

Unterhalb des Blechs 7 ist ein Kanal 8 und oberhalb des Blechs ein Kanal 9 bestimmt. Der Kanal 8 öffnet sich zum Rohrende 2b und verringert seinen Querschnitt zum Rohrende 2a hin, wo er geschlossen ist. Der Kanal 9 öffnet sich zum Rohrende 2a hin und verringert seinen Querschnitt zum Rohrende 2b hin, wo er verschlossen ist.

Die Verteilerrohre 4 sind mit dem Kanal 9 und die Verteilerrohre 5 sind mit dem Kanal 8 verbunden, so dass die auf beiden Seiten des Hauptrohrs 6 vorgesehenen Verteilerrohre 4 mit dem Kanal 9 ein erstes Sprühsystem und die Verteilerrohre 5 mit dem Kanal 8 eine zweites Sprühsystem bestimmen, wobei das erste Sprühsystem vom Ende 2a des Hauptrohrs mit Behandlungsflüssigkeit gespeist wird, während das andere Sprühsystem vom Rohrende 2b her gespeist wird.

Wie aus den Fig.1 und 3 ersichtlich ist, sind die Verteilerrohre 4 und 5 in ihrem Durchmesser mindesten zweifach zu ihrem geschlossenen Ende hin über konusartige Übergangsstücke 10 gestuft. So weisen die in den Fig.3 B-3F gezeigten Rohre 4 und 5 je nach Länge zwei, drei bzw.vier Abschnitte 4a, 4b, 4c, 4d bzw. 5a, 5b, 5c,5d auf, und zwar die den beiden Enden 2a bzw.2b des Hauptrohrs benachbarten Verteilerrohre zwei Abschnitte und die mittigen längsten Verteilerrohre vier Abschnitte. Die Stufen liegen so, daß die Rohre eine flache (d. h. geradlinige) Oberseite OS und eine gestufte Unterseite US aufweisen. Die Anordnung ist so getroffen, dass die Oberseite OS aller Verteilerrohre 4 und 5 in einer Ebene liegen, die z.B. bei Wartungsarbeiten mit Holzbohlen belegbar ist.

Wie aus den Fig.3A-3F ersichtlich ist, sind einige der Verteilerrohre über gekrümmte Anschlußstücke 10 und 12 an das Hauptrohr angeschlossen werden. Wie aus der Fig.2 und 3A-3F ersichtlich liegen die Anschlußstellen für die Verteilerrohre 4 an das Rohr 2 auf beiden Seiten des Hauptrohrs 2 jeweils über dem Blech 7, während die Anschlußstellen für die Verteilerrohre 5 auf beiden Seiten des Hauptrohrs unter dem Blech liegen. Die Höhenlage der Anschlußstellen der paarweise in Gegenüberstellung am Hauptrohr angeordneten Verteilerrohre 4,5 nimmt von einem Ende 2a zum anderen Ende 2b des Hauptrohrs 2 hin entsprechend der Neigung des Blechs 7 zu.

Bei der in der Fig.4 gezeigten Ausführungsform ist in einem Hauptrohr 13 konzentrisch ein Hilfsrohr 14 angeordnet. Der Ringraum zwischen den beiden Rohren bestimmt einen ersten Kanal 15 und das Innere des Hilfsrohrs einen zweiten Kanal16. Abwechselnd angeordnete Verteilerrohre 4' und 5' sind mit dem Kanal 15 bzw. mit dem Kanal 16 in gleicher Höhenlage verbunden. Die Behandlungsflüssigkeit wird an einem oder beiden Enden des Ringraums 15 bzw. an einem oder beiden Enden des Hilfsrohrs 14 eingespeist. Auch hier ergeben sich zwei von einander völlig unabhängige Verteilersysteme. Der Anschluß der Verteilerrohre 5' an den Kanal 16 durch die Wandlung des Hauptrohr 13 hindurch ist aber nicht so einfach wie bei der Ausführungsform gemäß den Fig. 1-3.

Die Probleme von voneinander unabhängigen Sprühsystemen ergeben sich nicht nur bei der Rauchgaswäsche, sondern auch bei der Wäsche von Abgasen oder Produktgasen bei chemischen Prozessen.

### Bezugszeichenliste

- 1: Sprüheinbau
- 2: Hauptrohr
- 2a,2b: Enden des Hauptrohrs
- 3: Wandung eines Waschturms
- 4,4': Verteilerrohre
- 4a, 4b, 4c, 4d: Verteilerrohrabschnitte
- 5,5': Verteilerrohre
- 5a, 5b, 5c, 5d: Verteilerrohrabschnitte
- 6,6': Düsen
- 7: Blech
- 8: Kanal
- 9: Kanal
- 10: Übergansstücke
- 11: Anschlußstücke
- 12: Anschlußsstücke
- 13: Hauptrohr
- 14: Hilfsrohr
- 15: Kanal
- 16: Kanal
- OS: Oberseite des Hauptrohrs
- US: Unterseite des Hauptrohrs

## Patentansprüche

1. Sprüheinbau für einen Turm einer Anlage zur Behandlung eines Gasstroms mit einer Flüssigkeit, insbesondere für eine Rauchgasreinigungsanlage, mit einem sich im wesentlichen horizontal durch die Turmmitte erstreckenden Hauptrohr, einer Vielzahl von sich zu beiden Seiten des Hauptrohrs im wesentlichen in einer Ebene erstreckenden Verteilerrohren und einer Vielzahl von jedem Verteilerrohr zugeordneten Sprühdüsen, wobei dem Einbau mindestens eine Pumpe zur Einspeisung der Behandlunsgflüssigkeit in das Hauptrohr zugeordnet ist,
**dadurch gekennzeichnet,**
**dass** das Hauptrohr (2;13) zweikanalig (8,9;15,16) ausgebildet ist und jeder Kanal (8/9;15,16) über mindestens eine Pumpe mit Behandlungsflüssigkeit beaufschlagbar ist und auf jeder Seite des Hauptrohrs ein Teil (4) der Verteilerrohre mit dem einen Kanal (9) und der andere Teil (5) der Verteilerrohre mit dem anderen Kanal (8) verbunden ist.

2. Sprüheinbau nach Anspruch 1,
**dadurch gekennzeichnet,**
**dass** sich in dem Hauptrohr (2) ein Blech (7) im wesentlichen vom Tiefstpunkt an dem einen Ende (2a) des Hauptrohrs im wesentlichen zu dem Höchstpunkt an dem anderen Ende (2b) des Hauptrohrs erstreckt, wobei die Einspeisung der Begandlungsflüssigkeit an gegenüberliegenden Enden der Kanäle erfölgt.

3. Sprüheinbau nach Anspruch 1,
**dadurch gekennzeichnet,**
**dass** in dem Hauptrohr (13) ein Hilfsrohr (14) angeordnet ist und der zwischen Hauptrohr und Hilfsrohr bestimmte Ringraum den einen Kanal (15) und das Innere des Hilfsrohrs den anderen Kanal (16) bestimmt, wobei eine Einspeisung von Behandlungsflüssigkeit an gegenüberliegenden Enden oder an benachbarten Enden der Kanäle erfolgt.

4. Sprüheinbau nach mindestens einem der Ansprüche 1 - 3,
**dadurch gekennzeichnet,**
**dass** die Verteilerrohre (4,5;4',5') auf jeder Seite des Hauptrohrs (2;13) abwechselnd (4,5,4.../4',5',4'...) mit dem einen Kanal (9;15) oder dem anderen Kanal (8;16)) verbunden sind.

5. Sprüheinbau nach mindestens einem der Ansprüche 1 - 4,
**dadurch gekennzeichnet,**
der Querschnitt der Verteilerrohre (4;5) zum freien Ende hin abgestuft (4a, 4b...;5a, 5b...) ist oder stetig abnimmt.

6. Sprüheinbau nach mindestens einem der Ansprüche 1 - 5,
**dadurch gekennzeichnet,**
**dass** die Stufung so erfolgt, dass die Verteilerrohre eine flache (OS) und eine gegenüberliegende gestufte Seite (US) aufweisen.

7. Sprüheinbau nach mindestens einem der Ansprüche 1 - 6,
**dadurch gekennzeichnet,**
**dass** die Verteilerrohre (4,5) mit ihrer flachen Seite als Oberseite (OS) in dem Turm angeordnet sind.

8. Sprüheinbau nach mindestens einem der Ansprüche 1 - 7,
**dadurch gekennzeichnet,**
**dass** die Abstände benachbarter und von den Verteilerrohren getragenen Düsen (6;6') innerhalb der Sprühebene in allen Richtungen gleich sind.

9. Turm einer Anlage zur Behandlung eines Gasstroms mit einer Flüssigkeit mit mindestens einem Sprüheinbau nach mindestens einem der Ansprüche 1 - 8.

## Claims

1. Spray fitting for a tower of an installation for treatment of a gas flow with a liquid, especially for a flue-gas purification assembly, with a main pipe extending essentially horizontally through the center of the tower, a plurality of distributing pipes which extend at both sides of the main pipe essentially in one plane, and a plurality of spray nozzles associated with each distributing pipe, whereby at least one pump for feeding the treatment liquid into the main pipe is associated with the fitting,
**characterized**
**in that** the main pipe (2; 13) is formed as two channels (8, 9; 15, 16) and each channel (8/9; 15, 16) can be supplied via at least one pump with treatment liquid and on each side of the main pipe, a part (4) of the distributing pipes is connected with one of the channels (9) and the other part (5) of the distributing pipes is connected with the other channel (8).

2. Spray fitting of claim 1,
**characterized**
**in that** a sheet (7) in the main pipe (2) extends essentially from the low point at one end (2a) of the main pipe essentially to the topmost point at the other end (2b) of the main pipe, wherein the supply of the treatment liquid takes place at opposite ends of the channels.

3. Spray fitting of claim 1,
**characterized**
**in that** in the main pipe (13), an auxiliary pipe (14) is arranged and the annular chamber defined between the main pipe and the auxiliary pipe defines one channel (15) and the interior of the auxiliary pipe defines the other channel (16), wherein a supply of treatment liquid takes place at opposite ends or adjacent ends of the channels.

4. Spray fitting of at least one of claims 1 through 3,
**characterized**
**in that** the distributing pipes (4, 5; 4', 5') on each side of the main pipe (2; 13) are alternatingly connected (4, 5, 4.../4', 4', 4'...) with one channel (9; 15) or the other channel (8; 16).

5. Spray fitting of at least one of claims 1 through 4,
**characterized**
**in that** the cross section of the distributing pipes (4; 5) is stepped (4a, 4b...; 5a, 5b...) towards the free ends or decreases constantly.

6. Spray fitting of at least one of claims 1 through 5,
**characterized**
**in that** the stepping takes place such that the distributing pipes have a flat (OS) side and an oppositely disposed stepped side (US).

7. Spray fitting of at least one of claims 1 through 6,
**characterized**
**in that** the distributing pipes (4, 5) are arranged with their flat sides as the upper side (OS) in the tower.

8. Spray fitting of at least one of claims 1 through 7,
**characterized**
**in that** the spacing of adjacent nozzles (6, 6') supported by the distributing pipes is the same within the spraying plane in all directions.

9. Tower of an installation for the treatment of a gas flow with a liquid with at least one spray fitting of at least one of claims 1 through 8.

## Revendications

1. Montage rapporté de pulvérisation pour une tour d'une installation de traitement d'un courant gazeux par un liquide, notamment d'une installation d'épuration des gaz de fumée, comprenant un tuyau principal s'étendant sensiblement horizontalement dans le milieu de la tour, une pluralité de tuyaux répartiteurs s'étendant sensiblement dans un plan de part et d'autre du tuyau principal et une pluralité de buses de pulvérisation associées à chaque tuyau répartiteur, au moins une pompe de refoulement du liquide de traitement dans le tuyau principal étant associée au montage,
**caractérisé,**
**en ce que** le tuyau ( 2; 13 ) principal est constitué sous la forme de deux canaux ( 8, 9; 15, 16 ) et chaque canal ( 8/ 9 ; 15, 16 ) peut être alimenté en du liquide de traitement par au moins une pompe et, de chaque côté du tuyau principal une partie ( 4 ) des tuyaux répartiteurs communique avec l'un des canal ( 9 ) et l'autre partie ( 5 ) des tuyaux répartiteurs communique avec l'autre canal ( 8 ).

2. Montage rapporté de pulvérisation suivant la revendication 1, **caractérisé en ce que** dans le tuyau ( 2 ) principal s'étend une tôle ( 7 ) allant sensiblement du point le plus bas à l'une des extrémités ( 2a ) du tuyau principal à sensiblement le point le plus haut à l'autre extrémité ( 2b ) du tuyau principal, l'alimentation en du liquide de traitement s'effectuant à des extrémités opposées des canaux.

3. Montage rapporté de pulvérisation suivant la revendication 1
**caractérisé**
**en ce qu'**un tuyau ( 14 ) auxiliaire est disposé dans le tuyau ( 13 ) principal et l'espace annulaire défini entre le tuyau principal et le tuyau auxiliaire définit l'un des canaux ( 15 ) et à l'intérieur du tuyau auxiliaire l'autre canal ( 16 ), une alimentation en fluide de traitement s'effectuant à des extrémités opposées ou à des extrémités voisines des canaux.

4. Montage rapporté de pulvérisation suivant au moins l'une des revendications 1 à 3,
**caractérisé en ce que**
les tuyaux ( 4, 5 ; 4', 5' ) répartiteurs communiquent de chaque côté du tuyau ( 2 ; 13 ) principal en alternance (4, 5, 4.../ 4', 5', 4'...) avec l'un des canaux ( 9 ; 15 ) ou l'autre canal ( 8; 16).

5. Montage rapporté de pulvérisation suivant au moins l'une des revendications 1 à 4,
**caractérisé en ce que**
la section transversale des tuyaux ( 4 ; 5 ) répartiteurs est étagée ( 4a, 4b... ; 5a, 5b ) vers l'extrémité libre ou diminue constamment.

6. Montage rapporté de pulvérisation suivant au moins l'une des revendications 1 à 5
**caractérisé en ce que**
l'étagement s'effectue de façon à ce que les tuyaux répartiteurs aient un coté ( US ) plan ( OS ) et un côté ( US ) opposé étagé.

7. Montage rapporté de pulvérisation suivant au moins l'une des revendications 1 à 6,
**caractérisé en ce que**
les tuyaux ( 4 ; 5 ) répartiteurs sont disposés dans la tour en ayant leur côté plat en tant que côté ( OS ) supérieur.

8. Montage rapporté de pulvérisation suivant au moins l'une des revendications 1 à 7,
**caractérisé en ce**
**que** les intervalles entre les buses ( 6, 6' ) voisines et portées par les tuyaux répartiteurs sont les même dans toutes les directions dans le plan de pulvérisation.

9. Tour d'une installation de traitement d'un courant gazeux par un liquide, comprenant au moins un montage rapporté de pulvérisation selon l'une des revendications 1 à 8.
